# EUROPEAN PATENT APPLICATION

(11) **EP 4 017 056 A1**
(43) Date of publication of application: **22.06.2022**
(21) Application number: 20306599.0
(22) Date of filing: 18.12.2020
(51) Int. Cl.: H04W 12/30

(54) **A METHOD FOR CHECKING IF AN UPDATE OF A FILE COMPRISING DATA HAS BEEN DONE ON A SECURE ELEMENT COOPERATING WITH A TERMINAL**

(71) Applicant: Thales DIS France SA, 92190 Meudon (FR)
(72) Inventor: GROS, Jean-François, 13881 Gémenos Cedex (FR); DANY, Vincent, 13881 Gémenos Cedex (FR); PHAN, Ly Thanh, 13881 Gémenos Cedex (FR); VOYER, Jérôme, 13881 Gémenos Cedex (FR)
(74) Representative: Scheer, Luc

(57) **Abstract**

The invention concerns a method for checking if an update of a file comprising data has been done on a secure element cooperating with a terminal, the secure element comprising a polling applet 103, the method comprising:
- When the polling applet 103 polls an OTA platform 102, sending from the OTA platform 102 to the polling applet 103 a hash of the data of the file previously transmitted to the secure element and stored in the secure element,
- Comparing at the polling applet 103 the received hash with the hash of the data stored in the secure element;
- Sending to the OTA platform 102 the result of the comparison.

## Description

The invention concerns telecommunications and especially 5G networks for loT devices. More precisely, the invention concerns the updating of a secure element via OTA (Over the Air), like a Sim card, a UICC, a USIM, a eUICC or a iUICC of a MNO (Mobile Network Operator). This secure element is cooperating with a terminal.

The terminal can be a mobile phone, a smartphone, a tablet, a PDA, a machine, an electronic powering or gas counter, a modem integrated in a car,...

The updating of a secure element can be done through two mechanisms: pushing or polling.

The pushing method consists in transferring files or data to a secure element from an OTA platform of a MNO without any request of the secure element.

The polling method consists in interrogating the OTA platform of the MNO by the secure element in the field in order to ask if the OTA platform has data or files to be updated in the secure element. This can be done on a regular basis or at each power on of the device with which the secure element is cooperating.

Since Release 16 of 3GPP specification, the 5G core network of a Home operator (MNO) is able to update a USIM content of the Home Operator for the following two use cases (3GPP TS 24.501):
- Steering of Roaming (SoR) Information (PLMN Files) update: The Unified Data Management function (UDM, corresponding to a HLR/HSS in 3G and 4G systems) gets the PLMN list (Preferred List of Mobile Network Operator) from the Steering of Roaming Application Function (SoR-AF, e.g. the OTA SoR server), then the SoR-AF asks the Secured packet Application Function (SP-AF) to encapsulate the PLMN list into a secured packet;
- To be noted that a secure packet can be seen as a list of instructions to be executed by a secure element. For instance, the encapsulation of the PLMN List into a secured packet, consist in creating an instruction sent to the secure element for instance to instruct the secure element to store the included PLMN list into the secure element file system.
- Also to be noted that the SP-AF may either encapsulate the PLMN list into a secured packet or may delegate the encapsulation process to another entity (e.g an OTA Platform). In this latter case, the SP-AF is acting as a gateway between the consumer network function (e.g. SoR-AF, UDM) and the encapsulation function (e.g. an OTA Platform).
- Routing Indicator update: The UDM asks the SP-AF to encapsulate the Routing Indicator as a secured packet.

The secured packets contain encrypted information for the secure element that updates some of his files.

After the sending of the information to the secure element, in the case of Steering of Roaming use case, the UDM is able to provide a delivery notification to the SoR-AF but not a Proof of Receipt (PoR). A delivery notification only indicates that the message has reached the terminal and that the terminal has delivered the message to the secure element. This differs from of a Proof of Receipt that indicates that the secure element has received, validated (or not) the secured packet and executed (or not) successfully the script inside the secured packet.

In the case of a Routing Indicator update, the UDM does not inform the SP-AF of any update of the Routing Indicator.

Some standardized mechanisms for 3G and 4G exist for transferring a PoR to the OTA platform (by http or SMS). But, in 5G networks, there is no http nor SMS mechanism foreseen for transferring to an OTA platform such a PoR.

More precisely, in 5G networks, since no PoR is provided to the SP-AF nor to the SoR-AF, there are three potential problems to be solved:
- Situation #1: When the secure element has been properly updated, the legacy OTA platform has no way to be confident about the content status of the secure element. Contrarily with the current legacy OTA system, in 5G system, the Mobile Operator is no longer able to know the content of its fleet of secure elements.
- Situation #2: The secure element has not been updated because the secured packet is not executed by the secure element, e.g. due to a synchronization counter (SQN - Sequence Number) mis-alignment. As there is no feedback system in the 5G specifications, there is no standard way to ensure the secure element has been properly updated.
- Situation #3: The secure element has not been updated because the secured packet is not delivered to the secure element by the terminal with which it cooperates. It is the same case as in situation #2, there is no way to inform the OTA platform that the update has failed, in order to ensure that a new update message can be sent to the secure element. Especially for loT devices, battery power consumption is a problem: It is better to exchange the fewer possible messages between the loT device and the OTA platform that administrates its secure element.

The invention proposes a solution to these problems.

More precisely, the invention proposes a method for checking if an update of a file comprising data has been done on a secure element cooperating with a terminal, the secure element comprising a polling applet, the method comprising:
- When the polling applet polls an OTA platform, sending from the OTA platform to the polling applet a hash of the data of the file previously transmitted to the secure element and stored in the secure element,
- Comparing at the polling applet the received hash with the hash of the data stored in the secure element;
- Sending to the OTA platform the result of the comparison.

Preferably, if the comparison indicates that the hashes are different, the OTA platform performs an update of the data.

Advantageously, the OTA platform also sends a list of identities of the files that should have been updated and the corresponding hash value for each of the files.

Preferably, the polling applet indicates to the OTA platform which file should be updated again if the hash of the data of the file does not correspond to the hash value of the file received from the OTA platform.

The method of the invention is preferably executed in a 5G network.

The invention also concerns an OTA platform administrating a secure element comprising a polling applet and a file system, the OTA platform comprising a processor for hashing the data comprised in a file a hash of the data of the file previously transmitted to the secure element and stored in the secure element.

Other particularities and advantages of the invention will appear when reading an advantageous embodiment of the invention, which is given as an illustration and not a limitation, and referring to the appended figures that represent two preferred methods according to the invention.
- Figure 1 represents exchanges between different entities, the result being that the secure element has been successfully updated;
- Figure 2 represents exchanges between these different entities, the result being that the secure element has not been successfully updated, due to a security layer failure detection;
- Figure 3 represents exchanges between these different entities, the result being that the secure element has not been successfully updated, due to the non-reception of an update by the secure element;
- Figure 4 represents exchanges between these different entities for another implementation of the invention.

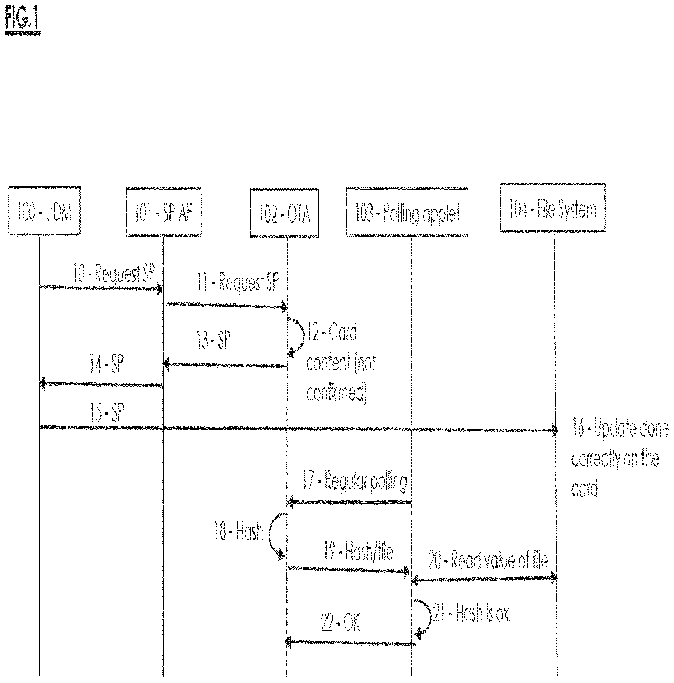

Figure 1 represents exchanges between different entities, the result being that the secure element has been successfully updated.

In this figure, the different entities are:
- A UDM 100 (equivalent to a HLR/HSS in 3G and 4G networks) of a MNO;
- A SP AF 101 (Secured packet Application Function) as defined by 3GPP. Its function is to generate secured packets SP (as specified in 3GPP TS 31.115) that have to be sent to a secure element.
- An OTA platform 102 of the MNO managing the secure element;
- A polling applet 103 integrated in the secure element;
- A file system 104 of the secure element.

Thus, the infrastructure comprises the UDM 100, the SP AF 101 and the OTA platform 102. The secure element comprises the polling applet 103 and the file system 104. The terminal with which the secure element cooperates is not represented.

The first step 10 of the method of the invention consists in requesting from the UDM 100 to the SP AF 101 to generate a Secured packet containing information (updates) to be sent to the secure element. The SP AF 101 relays the received request to the OTA platform 102 at step 11.

The SP AF 101 may only be an API layer/gateway between the UDM 100 and the OTA platform 102. The SP AF 101 and the OTA Platform 102 may also be implemented as a single entity SP AF 101, capable of generating secured packets.

At step 12, the OTA platform 102 returns to the SP AF 101 the card (secure element) content update. This card content can be not confirmed as it will be seen later on.

At step 13, the OTA platform 102 returns the SP to the SP AF 101 that relays it to the UDM 100 (step 14).

The UDM is then in possession of the SP and can send it via the terminal (not represented) to the file system 104 of the secure element (step 15).

At step 16, the file system stores the received information/parameters/instructions and updates the targeted files (for example the PLMN file).

After a given time frame, the polling applet 103 polls the OTA platform 102 (step 17) in order to see if some updates are available for the secure element.

The OTA platform 102 that knows the content of the SP then generates a hash (step 18) of the data that are comprised in the files transmitted to the secure element. More precisely, the OTA platform computes for each file that has to be updated a hash of its expected content (Hash1 for file 1, Hash2 for file 2,...) in the case where the script contained in the SP has been successfully executed by the targeted secure element.

It thus computes one hash per file (per hashing the content of each file) and each hash associated to each file is sent to the polling applet 103 (step 19).

At step 20, several operations occur:
- The polling applet 103 reads the reference of each file that was expected by the OTA platform to be updated;
- The polling applet 103 computes for each referenced file its hash value and compares it with the hash value received from the OTA platform 102;
- If the hash values are identical, it means that the current content of file in the file system 104 at step 16 has been properly updated (for each file).

If all the locally computed hash values are identical to those received, it means that the update of the secure element has been done properly. The polling applet then considers this at step 21 and sends at step 22 an information to the OTA platform 102 that the update of the secure element has been done correctly.

The process ends here until a new update of the secure element is available (step 10).

In short, the method according to the invention proposes to check if an update of a file comprising data has been done on a secure element cooperating with a terminal, the secure element comprising a polling applet 103, the method comprising:
- When the polling applet polls the OTA platform 102, sending from the OTA platform 102 to the polling applet 103 a hash of the data of the file previously transmitted to the secure element and stored in the secure element,
- Comparing at the polling applet 103 the received hash with the hash of the data stored in the secure element;
- Sending to the OTA platform 102 the result of the comparison.

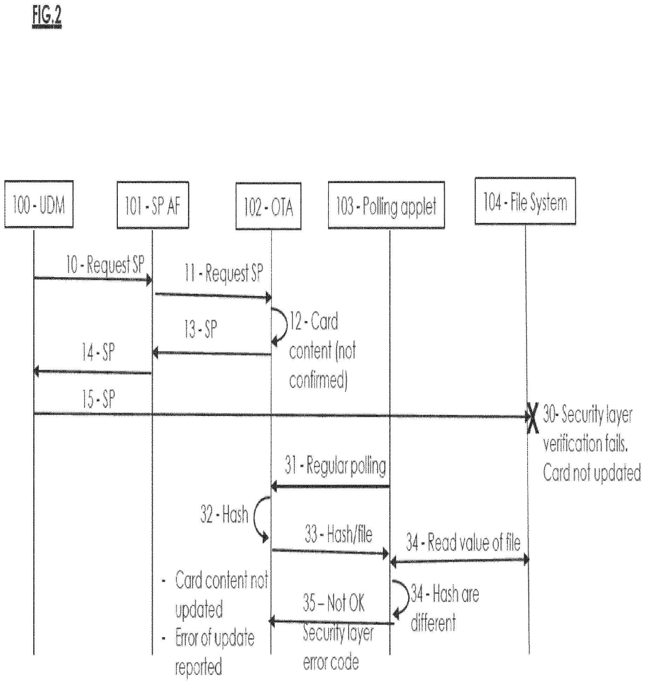

The result can be negative as it can be seen in regard of figure 2 that represents exchanges between these different entities, the result being that the secure element has not been successfully updated, due to a security layer failure detection.

In this figure, steps 10 to 15 are the same as those of figure 1.

At step 30, the security layer of the file system 104 executes a check and considers that there is a problem: The synchronization counter (SQN) is not in the good range or the signature of the OTA server 102 is not recognized. In this case, the secure element files are not updated.

The result is that after the polling 31, generation of the hash 32, transmission of the hash associated to each file to be updated (step 33) and verification of the hashes, it is considered that the hash is (are) different (step 34). The polling applet 103 then sends to the OTA platform 102 an error code (for example wrong SQN or wrong signature). The secure element content is thus not updated.

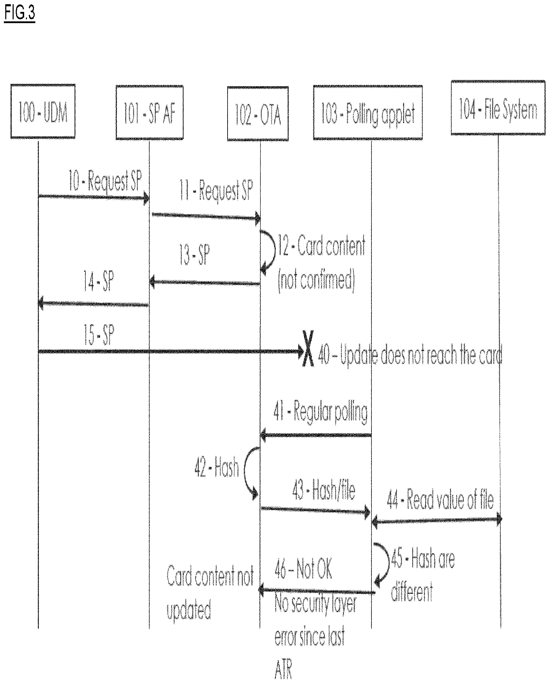

Figure 3 represents exchanges between these same entities, the result being that the secure element has not been successfully updated, due to the non-reception of an update by the secure element.

In this figure, steps 10 to 15 are identical to those of figures 1 and 2.

However, here, due to a transmission problem, at step 40, the SP sent by the UDM 100 does not reach the secure element. The polling applet 103 and the file system 104 did not receive the SP.

The result is that after steps 41 to 44 identical to steps 17-20 of figure 1 and 31-34 of figure 2, the hash(es) are not the same. So, the polling applet 103 considers that at least a hash is different (step 45) and sends this information to the OTA platform 102 (step 46): The hash(es) are different but there is no security layer error since the last ATR (Reset of the terminal).

The OTA platform 102 is thus informed that the secure element was not updated.

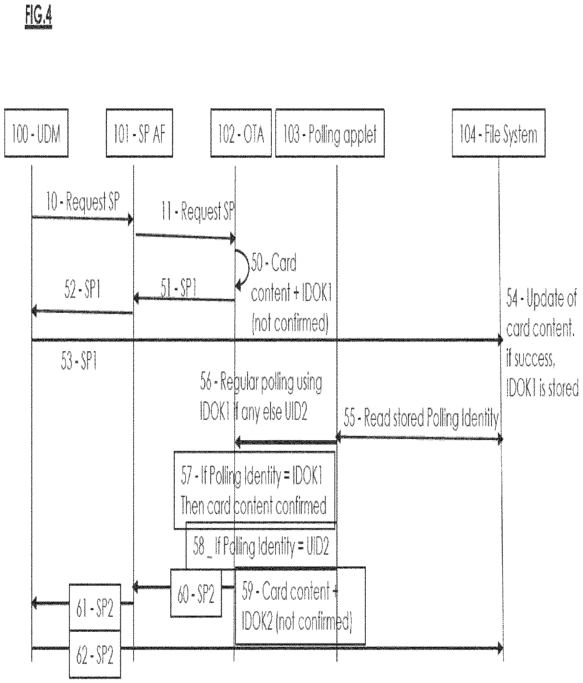

Figure 4 represents exchanges between these different entities for another implementation of the invention. This represents an alternative to solve the above mentioned problem. The same entities are here present (100 to 104).

Steps are the followings:
Steps 10 and 11 are the same as previously described.

At step 50, the OTA platform 102 sends to the SP AF 101 the content update of the secure element. The steps are thus the followings:
At step 51, the Secured packet SP and IDOK1 (a new identity of the secure element that the polling applet 103 should use for the next polling event), called SP1 (SP and IDOK1) is sent to the SP AF 101 that forwards it (step 52) to the UDM 100.

At step 53, the UDM 100 sends SP1 to the file system 104 of the secure element.

At step 54, the file system 104 executes the script contained in the SP and if the secure element content is correctly updated, the file system 104 stores IDOK1 (e.g. being representing the last instruction in the SP).

At step 55, the polling applet 103 reads the polling identity IDOK1.

Later on, when the polling applet 103 contacts the OTA platform 102 (for a regular polling at step 56), the card polling applet 103 uses the identity IDOK1 to connect to the OTA platform 102. By receiving the identity IDOK1 from the polling applet 103, the OTA platform 102 can assert that the update in the targeted secure element was successful, thus can be confident that the image of the file system of the targeted secure element in the OTA platform reflects perfectly the actual content of the file system in the secure element.

In the case the Secured packet has never arrived at the secure element or the update instructed by the OTA server has failed, the polling applet 103 uses an identity it has generated (UID2) independently of the update message or uses an older identity IDOK0 received in a previous SP0 and that was successfully executed, to connect to the OTA platform 102 at the next polling event. If at the next polling event, the OTA platform detects the first identity IDOK1 is used, then the secure element content is confirmed and no more action is required (step 57). If the OTA platform 102 detects that UID2 or an older IDOK0 is used by the applet 103 for polling then the OTA platform 102 generates and sends to the secure element a new update (secured packet) containing the required Card Content and at least one new identity IDOK2 (steps 58 to 62) .

The main advantages of the invention are:
- Minimize the communication required between the secure element and the OTA platform 102, that results in lower battery consumption and lower load on the network, which are significant advantages in loT devices deployment;
- The secure element base can be updated more rapidly as the OTA platform does not rely on long time out values. The update cycle period only depends on the polling period of the secure element;
- The secure element does not need to generate a Proof of Receipt for each update, or for ill intended update attempts, lowering also the load on the OTA platform 102.

So, contrarily to existing process that relies on the secure element to generate and send a Proof of Receipt for every updates to the OTA platform, the secure element in this invention only indicates to the OTA platform 102 which files has not been updated correctly when requested by the OTA platform 102 (through the hash exchange mechanism) during the regular polling process. This characteristic is essential in the case of low power or constraint loT devices deployment.

The invention also concerns an OTA platform 102 administrating a secure element comprising a polling applet and a file system 104, the OTA platform 102 comprising a processor for hashing the data comprised in a file a hash of the data of the file previously transmitted to the secure element and stored in the secure element.

## Claims

1. A method for checking if an update of a file comprising data has been done on a secure element cooperating with a terminal, said secure element comprising a polling applet (103), said method comprising:
- When said polling applet (103) polls an OTA platform (102), sending from said OTA platform (102) to said polling applet (103) a hash of the data of said file previously transmitted to said secure element and stored in said secure element,
- Comparing at said polling applet (103) the received hash with the hash of said data stored in said secure element;
- Sending to said OTA platform (102) the result of said comparison.

2. A method according to claim 1 wherein if said comparison indicates that said hashes are different, said OTA platform (102) performs an update of said data.

3. A method according to any of the claims 1 and 2, wherein said OTA platform (102) also sends a list of identities of the files that should have been updated and the corresponding hash value for each of the files.

4. A method according to claim 3, wherein said polling applet indicates to said OTA platform (102) which file should be updated again if the hash of the data of said file does not correspond to the hash value of the file received from said OTA platform (102).

5. A method according to any of the claims 1 to 4, wherein it is executed in a 5G network.

6. An OTA platform (102) administrating a secure element comprising a polling applet and a file system (104), said OTA platform (102) comprising a processor for hashing the data comprised in a file a hash of the data of said file previously transmitted to said secure element and stored in said secure element.
